# EUROPEAN PATENT SPECIFICATION

(11) **EP 1 500 582 B1**
(45) Date of publication and mention of the grant of the patent: **14.12.2005**
(21) Application number: 03425495.3
(22) Date of filing: 24.07.2003
(51) Int. Cl.: B62M 25/08

(54) **Method for carrying out a multiple gear-shifting in an electronically servo-assisted bicycle gearshift and related gearshift**
Verfahren zum Schalten eines Fahrradgetriebes mit elektrischem Hilfsantrieb und Schaltvorrichtung
Procédé pour changement de vitesse électrique et changement de vitesse

(43) Date of publication of application: 26.01.2005
(73) Proprietor: CAMPAGNOLO S.R.L., I-36100 Vicenza (IT)
(72) Inventor: Guderzo, Gianfranco, 36071 Arzignano, (Vicenza) (IT)
(74) Representative: Riccardi, Elisa

(56) References cited:
- EP-A- 1 103 456
- EP-A- 1 238 903
- US-A- 5 261 858
- US-A- 6 047 230

## Description

The present invention relates to a method for carrying out a multiple gear-shifting in an electronically servo-assisted bicycle gearshift, as well as a program, an electronic circuit and a gearshift having means for carrying out the method.

A bicycle gearshift generally comprises a chain and toothed wheel system for the transmission of motion from the axle of the pedal cranks to a driving-wheel of the bicycle and means for selecting the toothed wheels with which the chain is engaged to change the motion transmission ratio.

More specifically, a rear gearshift group is usually associated with the hub of the rear wheel of the bicycle, comprising at least two toothed wheels (also known as sprockets), a guide element for the chain (also known as rear derailleur or simply gearshift), and a control mechanism to displace the guide element for the chain in the axial direction of the gearshift group, so that the chain engages with a predetermined toothed wheel, in response to a manual command typically entered through levers associated with the handlebars of the bicycle. A displacement from a toothed wheel with a smaller diameter to a toothed wheel with a larger diameter is indicated as "upward gear-shifting", whereas a displacement from a toothed wheel with a larger diameter to a toothed wheel with a smaller diameter is indicated as "downward gear-shifting".

Similarly, a front gearshift group is usually associated with the axle of the pedal cranks of the bicycle, comprising at least two toothed wheels also known as crowns or gears, a guide element for the chain also known as front derailleur or derailleur, and an actuator to displace the guide element for the chain.

The front gearshift group (or in principle also the rear gearshift group) can be replaced by a single toothed wheel.

In a mechanical gearshift, the command mechanism comprises a steel cable slidably extending in a sheath ("Bowden cable") between a manually actuated lever and the guide element for the chain. The actuation of the lever in a first direction exerts a traction on the guide element for the chain through the steel cable, whereas the actuation of the lever in a second, opposite direction exerts a thrust on the guide element for the chain through the steel cable, or rather it leaves the cable and the guide element for the chain free to be drawn by a return spring. The size of the displacement of the steel cable is set so that the stroke of the guide element for the chain is essentially equal to the distance or pitch between two adjacent toothed wheels of the gearshift group.

In an electronically servo-assisted gearshift, the command mechanism of the guide element for the chain comprises an actuator generally having an electric motor and a lever system and an electronic control unit is provided, suitable to drive the actuators in order to carry out the gear-shiftings. The electronic control unit can operate in a manually operated travel mode in which the transmission ratio is input to the electronic control unit by the user through manual input means of a suitable interface, in an automatically operated travel mode in which the electronic control unit itself establishes the transmission ratio based upon an evaluation logic of the travel conditions, or in a semi-automatically operated travel mode which is half-way between the two.

The control of the actuators by the electronic control unit takes place based upon logic positions ("logic values") representing the physical positions of the various toothed wheels and stored in suitable memory means.

In the rear and/or front gearshift group there can also be a transducer to detect the position of the actuator (and therefore of the guide element for the chain) and indicate it to the electronic control unit.

Electronically servo-assisted bicycle gearshifts of the aforementioned type are described, for example, in patents US 5,480,356, US 5,470,277 and US 5,865,454 and in European patent application EP 1 103 456, all to the Applicant; in patent US 6,047,230 to Spencer et al. and in German patent application DE 39 38 454 A1 to Ellsäßer.

In particular, EP 1 103 456 describes such a gearshift in which the position transducers are of the absolute type, capable of providing an electric signal indicating the absolute position of the derailleurs, so that after being switched (back) on, such transducers take into account the actual position of the derailleurs, which could have slightly moved due, for example, to vibrations caused by the travel of the bicycle.

During travel, it is sometimes necessary or desired by the rider to proceed with a multiple gear-shifting, in other words to move the chain from the toothed wheel (of the rear or front gearshift group) with which it is engaged -or current toothed wheel to a toothed wheel not immediately adjacent to it, with a larger diameter (multiple upward gear-shifting) or with a smaller diameter (multiple downward gear-shifting).

To achieve such a purpose, mechanical command gearshifts are known in which a single actuation of the lever, or many actuations rapidly succeeding, corresponds to a displacement of the Bowden cable such as to impose on the guide element for the chain a displacement equal to. twice or three times the pitch between two adjacent toothed wheels. For practical reasons it is not possible to obtain a displacement equal to a multiple greater than two or three times the pitch between two adjacent toothed wheels, i.e the multiple gear-shifting is limited to a double or triple gear-shifting.

Similarly, a solution which could be suitable for electronically commanded gearshifts is the one in which the electronic control unit, to carry out a multiple gear-shifting, drives the actuator in a single step based upon the logic position representing the physical position of the target toothed wheel.

Both of these solutions have the drawback that the chain is arranged at a large angle with respect to the plane of the target toothed wheel, being askew with respect to the. intermediate toothed wheel(s). In such a situation, the chain can lose traction and/or get caught in the intermediate toothed wheels, with the result that the rider can lose his/her balance and fall. Moreover, the gearshift can be subject to mechanical damages. The problem is particularly relevant in the case of an upward multiple gear-shifting.

The Applicant has now recognized that the problem outlined above can be solved in an electronically servo-assisted gearshift by dividing a multiple gear-shifting request into a plurality of individual gear-shiftings between two adjacent toothed wheels. In such a way, the angle formed between the plane of extension of the chain and the planes of the toothed wheels is indeed reduced.

In a first aspect, the invention concerns a method for electronically servo-assisting an electronically servo-assisted bicycle gearshift, comprising the step of
a) actuating a multiple gear-shifting to move a chain in a gear-shifting direction with respect to a gearshift group having at least three toothed wheels, from a current toothed wheel to a target toothed wheel not immediately adjacent to the current toothed wheel,
   wherein step a) of actuating a multiple gear-shifting comprises the steps of:
b) actuating a single gear-shifting to move the chain to a toothed wheel immediately adjacent to the current toothed wheel in the gear-shifting direction,
c) repeating step b) until said immediately adjacent toothed wheel is the target toothed wheel (**claim 1**).

In other words, the electronic control unit takes care of translating a multiple gear-shifting request, generated for example by a prolonged actuation of the manual input means, in a plurality of single gear-shiftings. During the automatic or semiautomatic operation of the gearshift, the electronic control unit manages in the same way a multiple gear-shifting established by itself.

In a practical embodiment, the electronic control unit will send single gear-shifting drive signals to the rear or front actuator, respectively one at a time, typically through a power board - which for the purposes of the present invention must be considered as part of a distributed electronic control unit -.

In an embodiment (**claim 2**), the sending of a single gear-shifting drive signal takes place only after receipt of a successful gear-shifting, typically from the rear or front transducer, for example through the same power board. At the same time, the control system of the positioning of the chain, formed by the power board, the rear or front actuator and the rear or front transducer, accepts a single gear-shifting request, executes it, emits a successful gear-shifting signal and prepares to accept a subsequent single gear-shifting request.

In such embodiments, the single gear-shiftings therefore immediately succeed the one to the other. The Applicant has, however, recognized that the consequent very fast sequence of successive positionings of the chain can in some circumstances still turn out to be harmful to the mechanics of the gearshift and frustrating or dangerous for the rider.

In order to avoid that, more preferred embodiments of the method according to the invention provide for a delay between each single gear-shifting (**claim 3**). The delay allows the chain to remain effectively engaged on each intermediate toothed wheel enough to settle in its new extension plane, thus further loosening the mechanical stresses on the chain and on the teeth of the toothed wheels and avoiding the danger of clogging on the intermediate toothed wheels.

The delay can be counted from the receipt of the confirmation signal, if provided, or from the start of the step of actuating the single gear-shifting. In the first case, it will preferably have a value within the range of 150 milliseconds to 350 milliseconds (**claim 4**). In the second case, it will have a higher value in order to take into account the time foreseen to actuate the single gear-shifting.

If the delay is counted from the start of the step of actuating the single gear-shifting, its value can be set based upon the difference between the foreseen instant of successful actuation of the single gear-shifting and the real instant (**claim 5**).

The delay can be a single one or else it can be independently provided or not, for each gearshift group, front and rear (**claim 6**).

Alternatively or respectively in addition, there can be a delay for upwards multiple gear-shifting and/or a delay for downwards multiple gear-shifting, which can be single or independently provided or not for the two gearshift groups (**claim 7**).

In a more sophisticated version, the delay can be independently provided or not for each intermediate toothed wheel, and also independently according to whether the intermediate toothed wheel has been reached during an upward gear-shifting or during a downward gear-shifting (**claim 8**).

In the various aforementioned embodiments, the value of the predetermined delay(s) is preset in the factory at a respective default value. Preferably, the value of the predetermined delay(s) can however be modified by the user (**claim 9**). In such a case, it is suitable to foresee the possibility of going back to the default values (corresponding to nominal or average values), suitably stored in read only memory means.

Moreover, in the various aforementioned embodiments, the delay can be predetermined as a function of a predetermined displacement of the chain on the intermediate toothed wheel (**claim 10**).

The displacement can be evaluated based upon an angular position or angular speed sensor (**claim 11**).

The sensor can be or comprise a sensor of the crossing of a reference position by at least one chain engagement easing zone of the intermediate toothed wheel (**claim 12**). American patent application published as US 2001/0048211 A1 to the Applicant describes a sensor suitable for the purposes of the present invention, there used in order to establish the direction of movement of the chain and its angular position, to command the start of a gear-shifting not before the toothed wheel is at an angular position corresponding to the easing zone.

The predetermined displacement can also be evaluated based upon the speed of the chain or of the bicycle (**claim 13**).

In an advantageous embodiment, the predetermined angular displacement is equal to the angular distance between chain engagement easing zones of the intermediate toothed wheel or to a whole multiple thereof (**claim 14**).

In particular, if there are m easing zones equally distributed on the toothed wheel at an angular distance ALFA, the desired displacement shall preferably be chosen as equal to n x ALFA and the delay can be calculated from the relationship D = R x n x ALFA / v or D = n x ALFA /w, where R is the radius of the intermediate toothed wheel, v and w are respectively the linear and angular speed of the chain at the intermediate toothed wheel and n is a whole number greater than or equal to 1.

In a practical embodiment of the method of the invention, the electronically servo-assisted gearshift must of course be able to manage both multiple gear-shiftings according to the invention, and also single gear-shiftings, i.e. between the current toothed wheel and a target toothed wheel immediately adjacent to it.

In first embodiments, the electronic control unit is able to establish *a priori* whether the gear-shifting request is multiple or single.

In such a case the method according to the invention comprises the steps of waiting to receive a gear-shifting request, establishing whether the gear-shifting request is a single gear-shifting or a multiple gear-shifting request, if it is a single gear-shifting request, actuating a single gear-shifting, if it is a multiple gear-shifting request, actuating a multiple gear-shifting as outlined above (**claim 15**)**.**

In the automatic or semiautomatic operation, it is up to the electronic control unit itself to decide upon the transmission ratios and thus to generate an internal gear-shifting request. In manual operation, the step of establishing whether the gear-shifting request is a single gear-shifting or a multiple gear-shifting request can be carried out for example based upon the duration of a signal received by a user interface (**claim 16**), for example the duration of the actuation of a button or lever, based upon the number of consecutive signals received by a user interface (**claim 17**), for example the number of consecutive actuations of a button or a lever. Alternatively, a more complex user interface can be provided, suitable to send a plurality of diversified signals (**claim 18**), for example different buttons for the different request signals or a numerical keypad, a display equipped with a graphical interface or a touch-sensitive display, in order to directly indicate the desired target toothed wheel of the gear-shifting to the electronic control unit.

In other embodiments, the electronic control unit is not able to establish a priori whether the gear-shifting request is multiple or single.

In such a case, in the method according to the invention, may be provided the steps of waiting for a gear-shifting request, carrying out step b) outlined above, establishing whether it is a single gear-shifting request or a multiple gear-shifting request signal, if it is a multiple gear-shifting request, carrying out step c) outlined above, whereas if it is a single gear-shifting request, going back to waiting for a gear-shifting request (**claim 19**).

In automatic or semiautomatic operation, this can happen when the electronic control unit firstly generates an internal generic gear-shifting request and establishes immediately afterwards whether a single or multiple gear-shifting is more suitable. In manual operation, this embodiment can be advantageous when for example the type of gear-shifting is established based upon the duration of a signal or based upon the number of consecutive signals; indeed, in such a case it is possible to immediately actuate the first single gear-shifting, in any case requested, without waiting for the time required to establish whether it is a multiple gear-shifting request.

A similar embodiment comprises the steps of waiting to receive a start of gear-shifting request, carrying out step b) and at the same time monitoring the receipt of an end of gear-shifting request, if the end of gear-shifting request is received before starting to carry out the aforementioned step c) going back to the step of waiting for a start of gear-shifting request, otherwise carrying out the aforementioned step c), wherein the repetition of the aforementioned step b) takes place until receipt of the end of gear-shifting request as an indication of the condition that the immediately adjacent toothed wheel is the target toothed wheel (**claim 20**).

This embodiment is particularly advantageous since it allows the target toothed wheel not to be known from the beginning. The electronic control unit or the user, respectively in automatic or semi-automatic and in manual operation, shall establish *a posteriori* when a satisfactory transmission ratio has been reached. In case of manual operation, the start request and the end request can be provided respectively by the actuation and release of a button or lever, by the actuation of two different buttons or levers, by a first actuation and a subsequent second actuation of a button or lever.

In the various embodiments outlined above, a gear-shifting request can be suspended until a predetermined minimum time from the actuation of the last previous gear-shifting has passed, due to the technical reasons outlined above (**claim 22**).

In a second aspect, the invention concerns a program for electronically servo-assisting a bicycle gearshift, comprising program code means suitable to carry out the steps of the method outlined above when the program is carried out on a processor (**claim 23**).

The program is preferably embodied in at least one micro-controller.

Alternatively, the program can be stored in a memory for a processor or embodied in a read only memory.

In a third aspect, the invention concerns an electronic circuit suitable to carry out the steps of the method outlined above (**claim 24**).

In a fourth aspect, the invention concerns an electronically servo-assisted bicycle gearshift, comprising:
- a chain and toothed wheels system for the transmission of motion from the axle of the pedal cranks to a driving-wheel of the bicycle, said motion transmission system comprising
   -- at least one gearshift group having at least three toothed wheels coaxial along an axis selected among the axle of the pedal cranks and the axis of the driving-wheel, said at least one gearshift group comprising guide means for moving the chain into engagement with a predetermined toothed wheel of the gearshift group and an actuator of the guide means,
- an electronic control unit suitable to drive the actuator of the at least one gearshift group, comprising means for actuating the method outlined above (**claim 25**).

In the bicycle gearshift, said at least one gearshift group can comprise a transducer of the position of the guide element with respect to the toothed wheels of the gearshift group, suitable to provide said confirmation signal (**claim 26**).

The electronic control unit can comprise memory means suitable to store the or every predetermined delay **(claim 27**).

The memory means are preferably housed in a casing that can be removed from the bicycle, preferably in a removable display unit (**claim 28**).

The bicycle gearshift can comprise interface means between a user and the electronic control unit, operating to send said gear-shifting request, start of gear-shifting request and/or end of gear-shifting request signals to the electronic control unit, and/or to set the value of the or every of said delays (**claim 29**).

Further characteristics and advantages of the present invention shall become clearer from the following detailed description of some of its preferred embodiments, given with reference to the attached drawings. In the drawings:
- figure 1 schematically illustrates a perspective view of a bicycle equipped with an electronically servo-assisted gearshift according to the present invention,
- figure 2 illustrates a block diagram of the electronically servo-assisted gearshift according to the present invention,
- figures 3 and 4 schematically illustrate the position of the motion transmission system in a multiple gear-shifting according to the prior art;
- figure 5 schematically illustrates the position of the motion transmission system in a multiple gear-shifting according to the present invention;
- figure 6 is a block diagram of the actuation of a multiple gear-shifting according to the present invention;
- figures 7-10 schematically illustrate the actuation of a multiple gear-shifting according to various embodiments of the present invention;
- figure 11 illustrates a block diagram of a way of setting a delay of the multiple gear-shifting according to some embodiments the present invention; and
- figures 12-14 illustrate block diagrams of the management of single and multiple gear-shiftings according to various embodiments of the present invention.

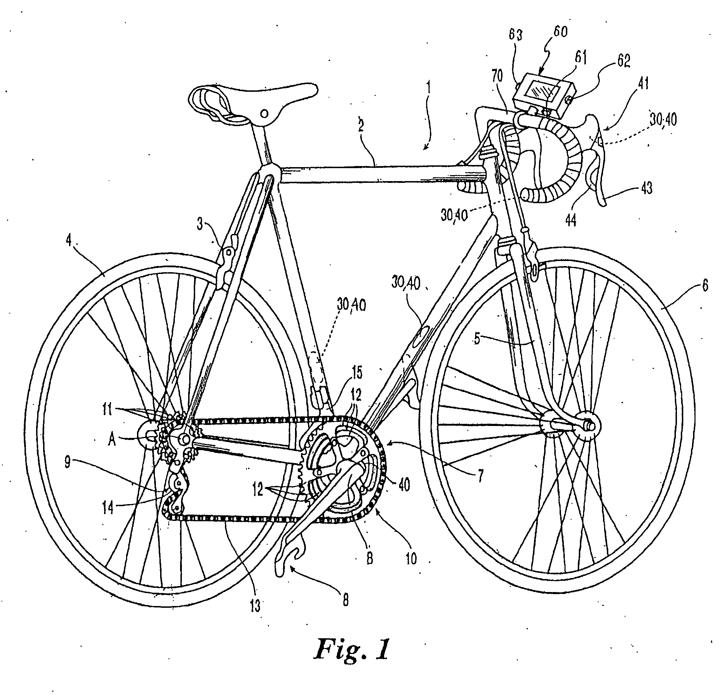

With reference to figure 1, a bicycle 1, in particular a racing bicycle, includes a frame 2 formed in a known way by tubular elements defining a support structure 3 for a rear wheel 4 and a fork 5 for a front wheel 6. Handlebars 70 having a tubular structure are operatively connected to the fork 5.

The frame 2, at its lower portion, bears an axle of the pedal cranks or pedal unit 7, of the conventional type, to activate the rear wheel 4 through an electronically servo-assisted gearshift according to the invention, generally indicated with reference numeral 8.

The gearshift 8 is essentially formed by a rear gearshift group 9 and a front gearshift group 10. The rear gearshift group 9 includes a plurality of toothed wheels or sprockets 11 (typically nine, ten, eleven or other in number) having different diameters and coaxial (axis A) with the rear wheel 4. The front gearshift group 10 includes a plurality of toothed wheels or crowns or gears 12 (three in number in the illustrated example, but which can also be two or other in number), having different diameters and coaxial (axis B) with the axle of the pedal cranks 7.

Although it is not at all advantageous in terms of number of transmission ratios, the front gearshift group (or in principle also the rear gearshift group) can be replaced by a single toothed wheel, and in such a case the invention shall of course be actuated just respectively in the rear (or front) gearshift group. In the same way, in the case in which one of the two gearshift groups (typically the front gearshift group) comprises just two toothed wheels, the invention shall of course be actuated in just the gearshift group comprising more than two toothed wheels (typically the rear gearshift group).

The toothed wheels 11 of the rear gearshift group 9 and the toothed wheels 12 of the front gearshift group 10 can be selectively engaged by a closed loop transmission chain 13, to form a chain and toothed wheels system for the transmission of motion from the axle of the pedal cranks 7 to the rear wheel 4, which is the driving-wheel of the bicycle 1.

The different transmission ratios can be obtained by moving a rear chain guide element or derailleur (or even simply gearshift) 14 of the rear gearshift group 9 and/or a front chain guide element or derailleur (or even simply derailleur) 15 of the front gearshift group 10.

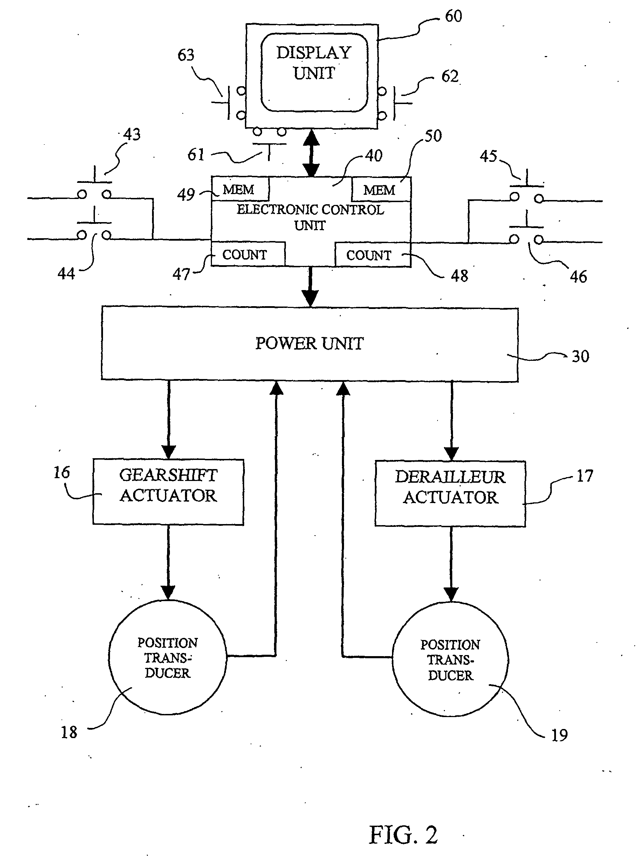

The rear derailleur 14 and the front derailleur 15 are commanded by a respective actuator 16, 17 (shown only schematically in figure 2) typically comprising an articulated parallelogram kinematism and an electric motor with a reducer to deform the articulated parallelogram.

With the actuators 16, 17 are preferably associated a position sensor of the rear derailleur (directly or through detection of the position of the rear actuator) or rear transducer 18 (shown only schematically in figure 2) and a position sensor of the front derailleur (directly or through detection of the position of the front actuator) or front transducer 19.

The details of the construction of the derailleurs 14, 15, of the respective actuators 16, 17 and of the respective position sensors or transducers 18, 19 are not illustrated here, since the present invention lies outside their specific construction. For greater details, reference is made, for example, to the description of the patent applications and patents above cited.

In particular, the transducers 18, 19 are preferably of the type described in EP 1 103 456 A2, suitable to provide an electric signal indicating the absolute position of the derailleurs 14, 15.

The electronically servo-assisted gearshift according to the invention comprises a microprocessor(s) electronic control unit 40 suitable to drive the actuators 16, 17 in particular according to the method of the invention to be described hereafter, to receive the output signals of the transducers 18, 19 if provided, and to control a user interface.

In the present description and in the attached claims, by electronic control unit 40 a logic unit is meant, which can, however, be formed by many physical units, in particular one or more distributed microprocessor(s) which can be contained in a display unit 60 and/or in an electronic power board 30 and/or in a command unit.

From such a logic point of view, the electronic control unit 40 comprises, besides the microprocessor(s), memory means which can comprise one or more devices for storing the instructions which codify the management program of the electronic gearshift, for the temporary storing of service variables for carrying out the program itself (registers), as well as for volatile, non-volatile or permanent storing of one or more delay value(s), as better specified in the remaining description.

The storing devices can be of one or more types among read only, write once, or read/write, random access or sequential access memories, and can be made in various technologies, such as optical memories, magnetic memories, etc.

The storing device(s) can be contained in the display unit 60 and/or in the electronic power board 30 and/or in the command unit and/or be separate devices.

In a particularly preferred embodiment, the display unit 60 can be removed from the bicycle 1 and houses at least part of the memory means of the electronic control unit 40. In such a case the values set by the user for various parameters of the electronically servo-assisted gearshift 8, in particular the value of one or more delay(s), are preferably stored in the memory means housed in the display unit 60. This embodiment is advantageous above all in the case of racing bicycles, where the values set by the user reflect the "know-how" of the rider and are therefore private, as well as since it allows the display unit, which is relatively expensive, to be protected.

When the display unit 60 is reconnected to the bicycle 1, the values of the variables there stored can be copied in a temporary memory of the electronic control unit 40.

The electronic power board 30, equipped with a battery, supplies electrical power to the motors of the actuators 16, 17 and to the microprocessor(s) electronic control unit 40, as well as, if provided , to the transducers 18, 19 and to the display unit 60 if provided. The battery is preferably rechargeable and the rear derailleur 14 can include, in a per se known way, a dynamo-electric unit (not shown) to recharge the battery.

The electronic power board 30 is housed for example in one of the tubes of the handlebars 70, in one of the tubes of the frame 2, for example at a support for a bottle (not illustrated), or in the display unit 60, which is preferably housed centrally on the handlebars 70.

The' transfer of information between the various components is carried out through electric cables, advantageously housed inside the tubes of the frame 2, or else with wireless methods, for example with Bluetooth protocol.

The electronically servo-assisted gearshift 8, and in particular the electronic control unit 40, can operate in a manual operation travel mode in which the desired transmission ratio for each gearshift group 9, 10, in other words the toothed wheel 11 or 12 with which the chain 13 must engage, is imposed on the electronic control unit by the user through manual input means of a suitable interface, better described hereafter; in an automatic operation travel mode in which the electronic control unit 40 itself establishes the transmission ratio based upon an evaluation logic of the travel conditions (for example through speed sensors, inclinometers, pressure sensors or sensors of the heartbeat of the rider etc.); or in a semi-automatic operation travel mode which is half-way between the two, as well as other service modes such as a programming mode, a diagnostics mode, etc.

Irrespectively of the travel mode, the gearshift requests between the current toothed wheel 11, 12 (the toothed wheel 11, 12 with which the chain 13 is engaged at the moment of the gear-shifting request) and a target toothed wheel are managed by the electronic control unit 40.

According to the present invention, the gear-shifting requests can be single gear-shifting requests, when the target toothed wheel is immediately adjacent to the current toothed wheel 11, 12 (the toothed wheel 11, 12 with which the chain 13 is engaged at the moment of the gear-shifting request), or else multiple gear-shifting requests, when the target toothed wheel is not immediately adjacent to the current wheel.

In the case of a single gear-shifting request, the electronic control unit 40, irrespectively of the travel mode, takes care of driving the actuator 16, 17 in order to move the guide element for the chain 14, 15 to take the chain 13 in a position such as to engage with the target toothed wheel 11, 12.

The control of the actuator 16, 17 takes place with reference on the one hand to logic positions ("logic values") representing the physical positions of the various toothed wheels 11, 12 and stored in suitable memory means 49, 50, and on the other hand to a logic value representing the position of the actuator 16, 17.

The logic value representing the position of the actuator 16, 17 can be provided by a counter 47, 48 (embodied by a register or by a variable stored in a memory cell of the electronic control unit 40) updated by the electronic control unit 40 whilst it drives the actuator 16, 17, for example increased or decreased by one unit for every step imposed on the motor of the actuator 16, 17 when this is a stepper motor. Alternatively, the logic value representing the position of the actuator 16, 17 can be provided by the transducer 18, 19. As a further alternative, the logic value representing the position of the actuator 16, 17 can be provided by the counter 47, 48, the output of the transducer 18, 19 being used by the electronic control unit 40 as a confirmation or feedback signal.

For each gearshift group 9, 10, in the memory means 49, 50 the logic positions of all the toothed wheels 11, 12 can be stored, or else one or more differential values corresponding to the pitch(es) between two adjacent toothed wheels 11, 12 can be stored, possibly together with the position of a toothed wheel 11, 12 taken as a reference.

In the case of a multiple gear-shifting request, in a conventional electronically commanded gearshift the electronic control unit would drive the actuator 16, 17 in a single step based upon the logic position representing the physical position of the target toothed wheel.

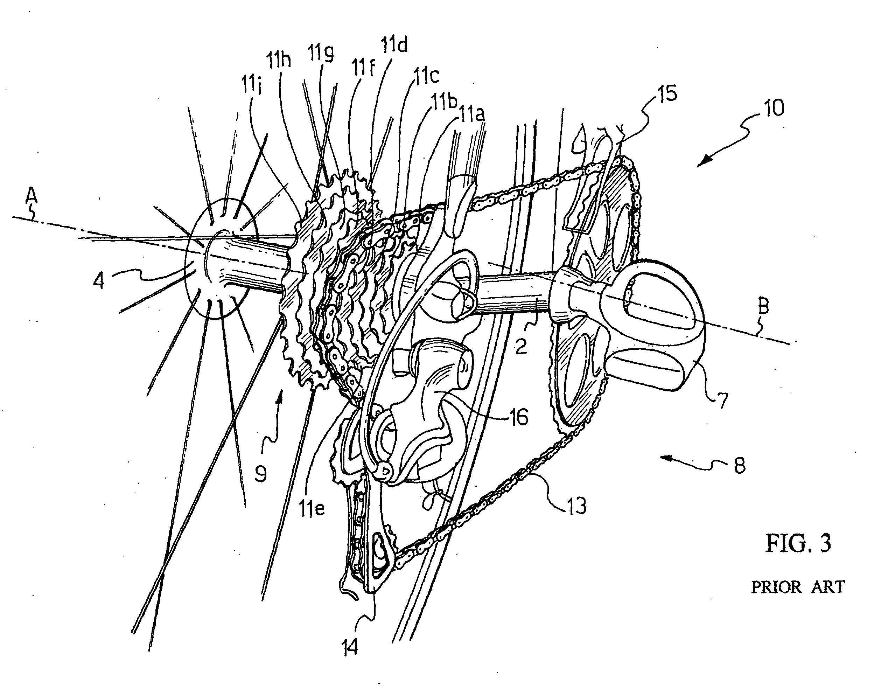

Figure 3 schematically illustrates, in a perspective view, the main elements of the motion transmission system, in other words the toothed wheels of the rear gearshift group, indicated by reference numerals 11a-11i, the rear guide element or gearshift 14, the toothed wheels of the front gearshift group, of which only the outermost toothed wheel with the largest diameter is visible, the front guide element or derailleur 15, and the chain 13.

More specifically, the position of the gearshift 14 and of the chain 13 at the moment of a multiple gear-shifting from the toothed wheel 11c to the toothed wheel 11f is illustrated (i.e. a triple upwards gear-shifting, in this example) and carried out according to the prior art.

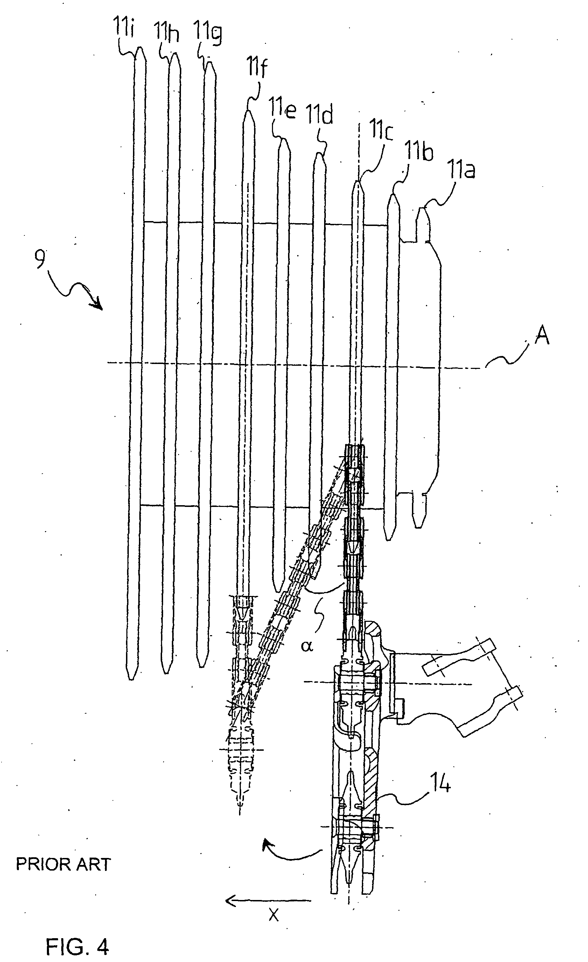

Figure 4 schematically illustrates a view from the back side of the bicycle 1. Therefore, only the toothed wheels 11a-11i of the rear gearshift group 9, the rear guide element or gearshift 14 and the chain 13 can be recognized. More specifically, the initial positions (to the right) and the end positions (to the left) of the gearshift 14 and of the chain 13, as well as the intermediate position of the chain 13 at the moment of a multiple gear-shifting from the toothed wheel 11c to the toothed wheel 11f carried out according to the prior art are illustrated.

As it can be seen, the chain 13, drawn to move in the way X of the direction of axis A, is arranged at a large angle ALFA (formed between the plane of extension of the chain 13 and the planes of the toothed wheels 11), being askew with respect to the intermediate toothed wheels 11d, 11e. As stated in the introductory part of the present description, in such a situation the chain 13 can lose traction and/or get caught in the intermediate toothed wheels 11d, 11e, with the result that the rider can lose his/her balance and fall. Moreover, the gearshift can be subject to mechanical damages.

According to the present invention, on the contrary, a multiple gear-shifting request is divided into a plurality of single gear-shiftings between two adjacent toothed wheels 11, 12.

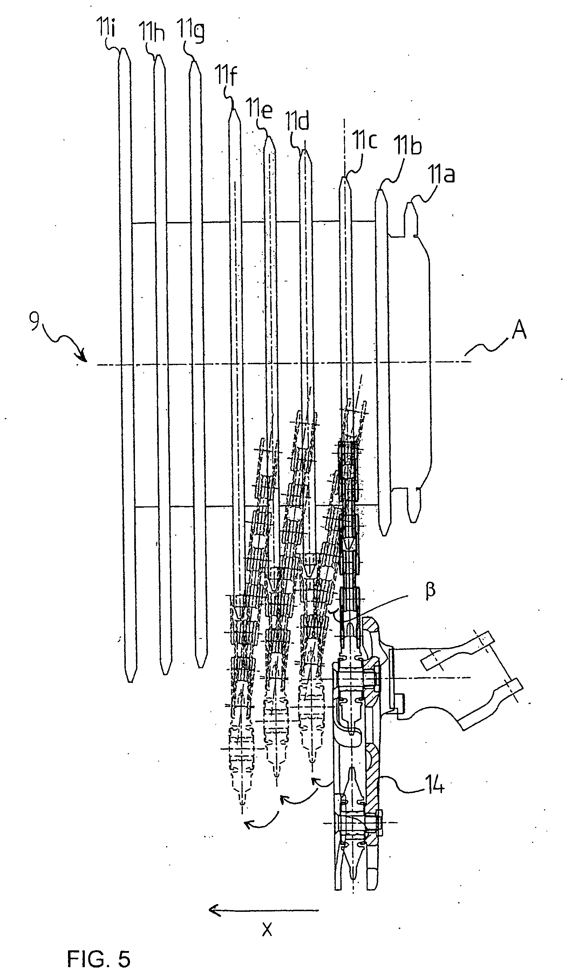

As an example and for a direct comparison with figure 4, figure 5 illustrates, in a view similar to figure 4, the management of a multiple gear-shifting request from the current toothed wheel 11c to the target toothed wheel 11f (i.e. a triple upwards gear-shifting) carried out according to the present invention. The guide element or gearshift 14 and the chain 13 are illustrated, from right to left, in the position existing before the gear-shifting request, in which the current toothed wheel is toothed wheel 11c, in the position existing after the first single gear-shifting, in which the current toothed wheel is toothed wheel 11d, in the position existing after the second single gear-shifting, in which the current toothed wheel is toothed wheel 11e, and in the end position, in which the current toothed wheel is the target toothed wheel 11f.

It can be seen that the angle BETA formed between the plane of extension of the chain 13 and the planes of the toothed wheels 11d, 11e, 11f is very small with respect to the angle ALFA illustrated in figure 4. As a consequence of such a reduction, the aforementioned drawbacks are essentially eliminated.

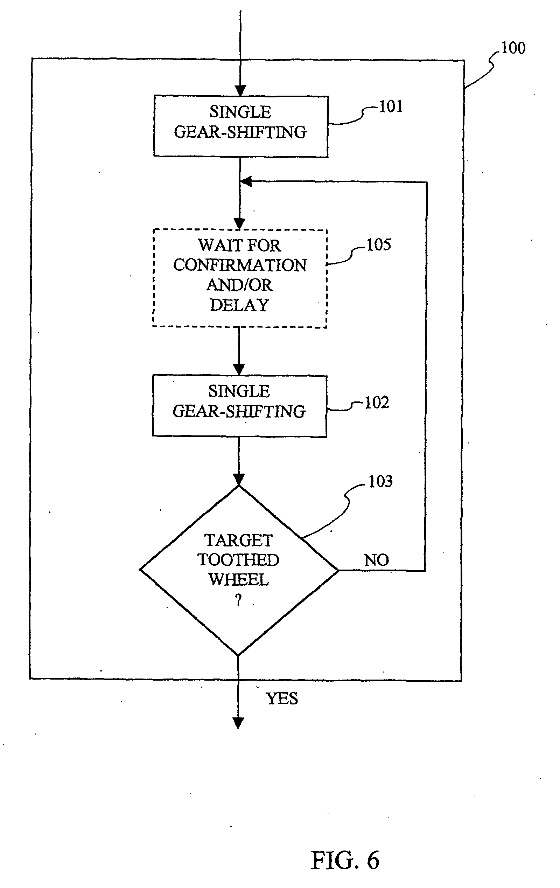

More generally, according to the present invention (see the block diagram of figure 6), a multiple gear-shifting 100 to move the chain 13 in a gear-shifting direction (X) with respect to a gearshift group 9, 10 having at least three toothed wheels, from a current toothed wheel (11c in the example of figure 4) to a target toothed wheel (11f) not immediately adjacent to the current toothed wheel (11c), is carried out through the steps of:
- actuating a single gear-shifting 101 to move the chain 13 to a toothed wheel (11d, then 11e, then 11f) immediately adjacent to the current toothed wheel (11c, then 11d, then 11e) in the gear-shifting direction (X), and
- repeating 102 the previous step a certain number of times (three in the illustrated example), until said immediately adjacent toothed wheel (11d, then 11e, then 11f) is the target toothed wheel (11f), as evaluated in block 103

Each single gear-shifting 101, 102 is carried out with the procedures outlined above, in other words with the driving of the actuator 16, 17 in order to move the guide element for the chain 14, 15 to bring the chain 13 in a position such as to engage with the toothed wheel 11, 12 respectively immediately adjacent to the toothed wheel 11, 12 respectively current, with reference to the logic positions and to the logic value representing the position of the actuator 16, 17.

Between one single gear-shifting and the other, the electronic control unit 40 can, in particular, wait for a confirmation of successful gear-shifting, for example the confirmation by the transducer 18, 19 (optional block 105).

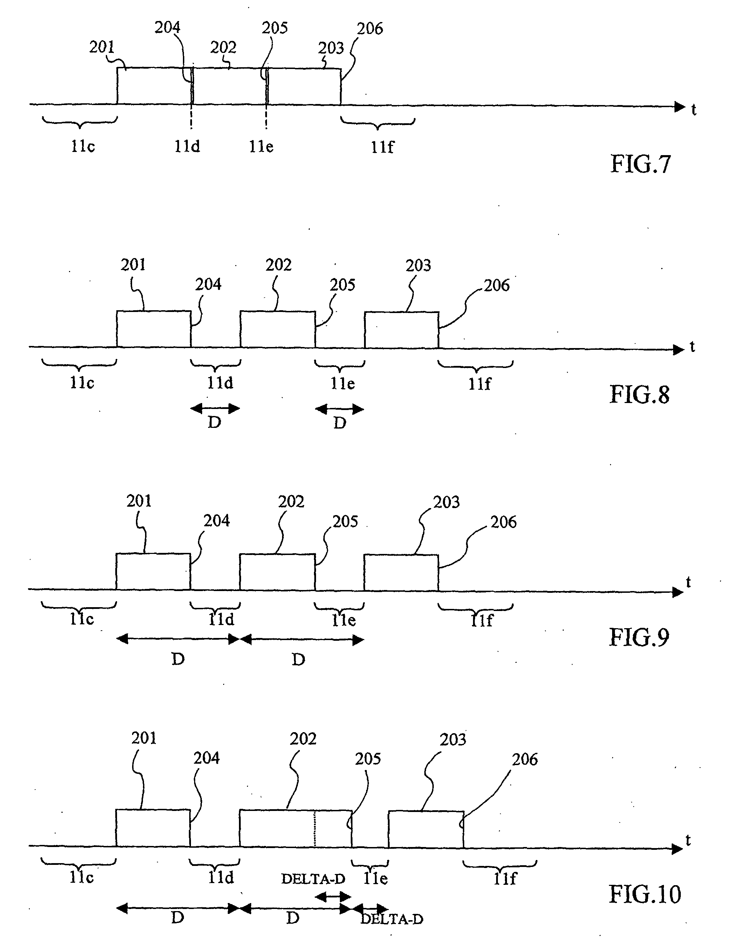

In figure 7 are schematically indicated and not on scale, with reference to the example of figure 5, the time axis, signals 201-203 corresponding to the time ranges in which the actuator 16 (17) is driven by the electronic control unit 40 (actuation of the single gear-shiftings 101, 102, 102) and the toothed wheels 11c, 11d, 11e, 11f with which the chain 13 engages. The rising edges of the signals 201-203 correspond to the start of the single gear-shifting steps, and the falling edges 204-206 can in particular correspond to the confirmations of successful gear-shifting.

As mentioned in the introductory part of the present description, the Applicant has recognized that the very quick sequence of successive positionings of the chain 13, at the toothed wheels 11d, 11e, 11f, can still in some circumstances turn out to be harmful to the mechanics of the gearshift 8 and frustrating or dangerous for the rider.

To avoid this, in the method according to the invention a delay D (optional block 105) can be provided between each single gear-shifting actuation step 101, 102.

The delay D allows the chain to remain effectively engaged on each intermediate toothed wheel 11d,11e enough to settle in its new plane of extension, thus further loosening the mechanical stresses on the chain 13 and on the teeth of the toothed wheels 11d, 11e and the danger of clogging on the intermediate toothed wheels 11d,11e.

The delay between the successful actuation of every single gear-shifting 101, 102 and the start of a subsequent single gear-shifting 102 preferably has a value within the range between 100 milliseconds and 350 milliseconds, more preferably between 120 milliseconds and 250 milliseconds, even more preferably between 140 milliseconds and 220 milliseconds.

When in block 105 both the wait for the confirmation signal and the wait for the delay D are actuated, the delay D can be counted from the receipt of the confirmation signal (figure 8) or from the start of the step of actuating the previous single gear-shifting 101, 102 (figure 9). In this second case, it will have a greater value to take into account the time foreseen for the actuation of the single gear-shifting 101, 102, typically about 150-300 milliseconds, according to the rider, to the gear-shifting and to the travel conditions, if going uphill, going along the flat or going downhill etc.

Moreover, in this second case, the value of the delay D can be set based upon the difference DELTA-D between the foreseen instant (falling edge of the single gear-shifting 202 shown with a broken line) of successful actuation of the single gear-shifting and the receipt of the confirmation of successful gear-shifting (figure 10), in other words increased or decreased if the confirmation signal is received before or, respectively, after the foreseen instant.

Although up to now reference has been made to a single delay D, waited for between the upwards and downwards single gear-shiftings of the front gearshift group 9 and of the rear gearshift group 10, as far as the applicable value of the delay is concerned, there are different possibilities.

In a first embodiment a single predetermined delay D is provided, which is used for each single intermediate gear-shifting of a multiple gear-shifting.

In a second embodiment, a delay UD for each upward gear-shifting and/or a delay DD for each downward gear-shifting is provided.

Since the tension of the chain 13 is different at the guide elements 14, 15 of the rear and front gearshift groups 9, 10, and since the pitch between adjacent toothed wheels 11 of the rear gearshift group 9 can be different from the pitch between adjacent toothed wheels 12 of the front gearshift group 10, and since the distance between the guide element 14, 15 for the chain 13 and the toothed wheels 11, 12 is different in the case of the two gearshift groups, front 9 and rear 10, it may be suitable to provide or not, in an independent manner, and thus with different values, the delay to be applied to the rear gearshift group 9 and to the front gearshift group 10.

Thus, in a third embodiment, the memory means are suitable to store a single delay RD for the rear gearshift group 9 and/or a single delay FD for the front gearshift group 10.

In a fourth embodiment, the memory means are suitable to store, for the rear gearshift group 9, an upward gear-shifting delay RUD and/or a downward gear-shifting delay RDD and/or, for the front gearshift group 10, an upward gear-shifting delay FUD and/or a downward gear-shifting delay FDD.

According to a fifth embodiment, which favors the optimization relative to the single gear-shiftings of the operation of the electronically servo-assisted gearshift 8 and of the method for servo-assisting it of the present invention taking into account the different diameters of the intermediate toothed wheels, the memory means are suitable to store independently up to a delay RiD for each intermediate toothed wheel of the rear gearshift group 9 and a delay FiD for each intermediate toothed wheel of the front gearshift group 10.

According to a sixth embodiment, the memory means are suitable to store independently up to an upward gear-shifting delay RiUD,FiUD and a downward gear-shifting delay RiDD,FiDD for each intermediate toothed wheel 11, 12 of each gearshift group 9, 10.

In the various aforementioned embodiments, the value of the or each delay is preset in the factory to default values. Preferably a setting operating mode of the electronic control unit 40 is then provided, in which the value of the or of each delay can be changed by the user. Before describing an example of a flow diagram of such a setting operating mode, it is worth emphasizing that in such a case it is suitable to foresee the possibility of going back to the default values (corresponding to nominal or average values), suitably stored in read only memory means. Moreover, an embodiment in which the delays are set by the user based upon a respective differential amount to be applied to the default value is also possible.

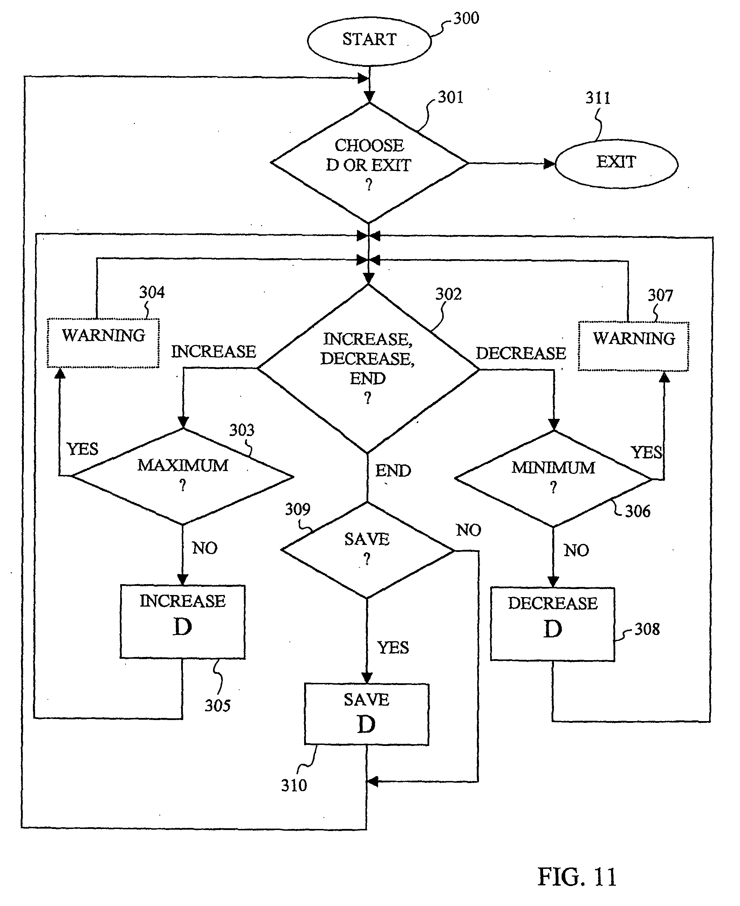

Figure 11 illustrates an example of a flow diagram of the programming operating mode.

Starting from an initial block 300, in a block 301, the electronic control unit 40 checks whether one wishes to activate the setting mode and, in the affirmative case, with respect to which delay, for example (in the aforementioned fourth embodiment) to the upwards gear-shifting delay RUD of the rear gearshift group 9, to the downwards gear-shifting delay RDD of the rear gearshift group 9, to the upwards gear-shifting delay FUD of the front gearshift group 10 or to the downwards gear-shifting delay FDD of the front gearshift group 10, or whether one wishes to leave the setting mode in a block 311.

After block 301, the electronic control unit 40 checks in a block 302 whether one wishes to increase or decrease the preselected delay, or else to end the setting out related to the preselected delay.

If the electronic control unit 40 establishes that one wishes to increase the preselected delay (left side output from block 302), in a block 303 the electronic control unit 40 checks whether the preselected delay has a maximum value (general or specific for the preselected delay) and, in the affirmative case, goes back to block 302, possibly generating a warning to the user in an optional block 304.

In case in the block 303 the electronic control unit 40 verifies that the preselected delay does not have the maximum value, it takes care, in a block 305, of increasing the value of the preselected delay by a unit of time, then going back to block 302.

In the same way, if at block 302 the electronic control unit 40 establishes that one wishes to decrease the preselected delay (right side output), in a block 306 the electronic control unit 40 checks whether the preselected delay has a minimum value (general or specific for the preselected delay) and, in the affirmative case, goes back to block 302, possibly generating a warning to the user in an optional block 307.

In case in the block 306 the electronic control unit 40 verifies that the preselected delay does not have the minimum value, it takes care, in a block 308, of decreasing the value of the preselected delay by a unit of time, then going back to block 302.

In case in block 302 the electronic control unit establishes that one wishes to end the setting out related to the preselected delay (lower output), the execution passes to a block 309 in which the electronic control unit 40 checks whether one wishes to save the changes carried out.

In the affirmative case, the electronic control unit 40, in a block 310, saves the value of the preselected delay and goes back to block 301, in the negative case it goes back directly to block 301.

The various checks of what the user wishes to do can take place on the basis of a user interface, for example a graphical interface implemented on the display unit 60, through a touch-sensitive display or through auxiliary buttons as exemplified by the buttons 61-63 of figure 2 and/or on the basis of the same manual command means which send the upward and downward gear-shifting request commands, the electronic control unit 40 suitably interpreting the signal generated by the activation of such manual command means according to the context, for example through logic gates or Boolean functions.

Such manual command means can for example comprise levers 43, 44 (figures 1 and 2) associated with the brake lever 41 on a grip of the handlebars 70 for the upwards and downwards single gear-shifting signals, respectively, of the rear gearshift group 9, and levers 45, 46 (figure 2) associated with the brake lever on the other grip of the handlebars 70 for the upwards or downwards single gear-shifting signals of the front gearshift group 10.

As an alternative to the levers 43-46, two manually actuated buttons, or two buttons actuated by a swing lever can be provided.

The levers or buttons suitable to provide the single gear-shifting requests can also be used to provide the multiple gear-shifting requests, where the type of gear-shifting request can be distinguished for example by the actuation time, by the number of consecutive actuations, by the fact that with a first actuation a start of gear-shifting request is generated and with a second actuation an end of gear-shifting request is generated, etc.

Alternatively, the manual command means can comprise other buttons or levers suitably intended for the multiple gear-shifting requests (not shown), as well as a numerical keypad or a graphical interface implemented on the display unit 60, with which the rider directly indicates the target toothed wheel.

According to the type of implementation, the electronic control unit 40 can be able to establish a priori whether the gear-shifting request coming from the rider is multiple or single, or else cannot. In the same way, in normal travel mode with automatic or semi-automatic operation, the electronic control unit 40 can directly generate internal single gear-shifting requests or internal multiple gear-shifting requests, or else can generate an internal generic gear-shifting request, establishing afterwards whether the request is for a single or a multiple gear-shifting.

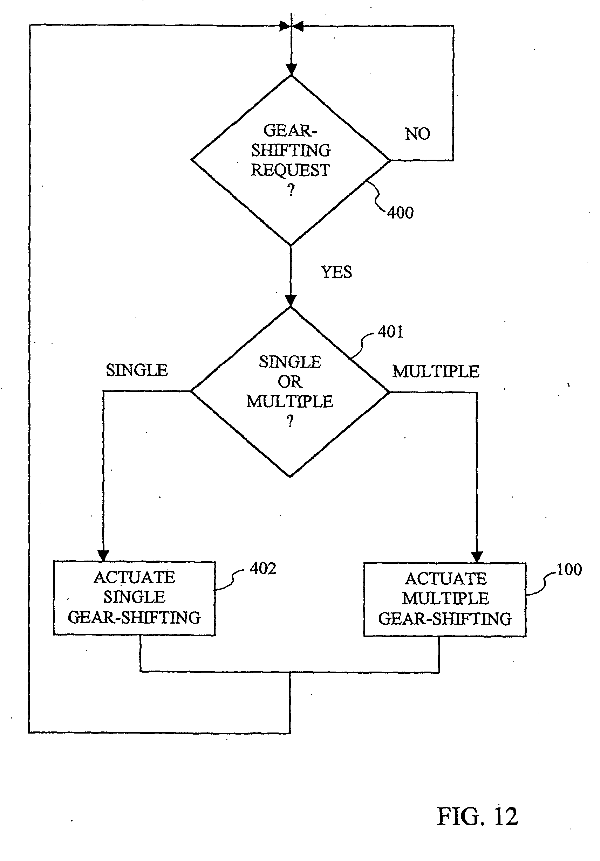

When the electronic control unit 40 is able to establish *a priori* whether the gear-shifting request coming from the rider is multiple or single, the method according to the invention comprises (figure 12) the steps of waiting in a block 400 for the receipt of a gear-shifting request, establishing in a block 401 whether the gear-shifting request is a single or a multiple gear-shifting request, if it is a single gear-shifting request, actuating, in a block 402, a single gear-shifting in the way outlined above, if it is a multiple gear-shifting request, actuating, in a block 100, a multiple gear-shifting as outlined above.

As stated, in manually commanded normal travel mode, the step 401 of establishing whether the gear-shifting request is a single gear-shifting request or a multiple gear-shifting request can be carried out, for example, based upon the duration of a signal received by the user interface, for example the duration of the pressing of one of the levers 43-46, based upon the number of consecutive signals received by a user interface, for example the number of consecutive presses of one of the levers 43-46, or based upon the particular signal indicating the desired target toothed wheel of the gear-shifting, transmitted by the graphical interface or by the numerical keypad.

Establishing whether the gear-shifting request is single or multiple generally requires a certain amount of time. It is thus advantageous to actuate immediately the first single gear-shifting between the current toothed wheel and the immediately adjacent toothed wheel, a single gear-shifting which is, in any case, requested.

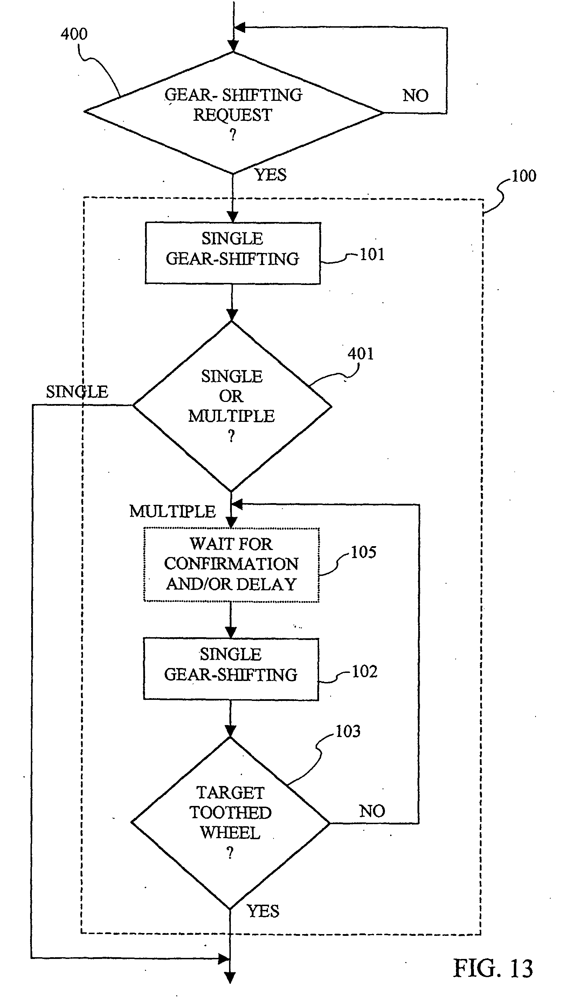

In other words, with reference to the block diagram of figure 13, upon receipt of a gear-shifting request in block 400, block 101 (cf. figure 6) of actuating a single gear-shifting is immediately carried out to move the chain 13 to a toothed wheel immediately adjacent to the current toothed wheel; immediately after or during its execution, it is established in block 401 whether the request is for a multiple or a simple gear-shifting. In the first case the execution shall continue as described above with reference to figure 6, whereas in the second case the execution shall end.

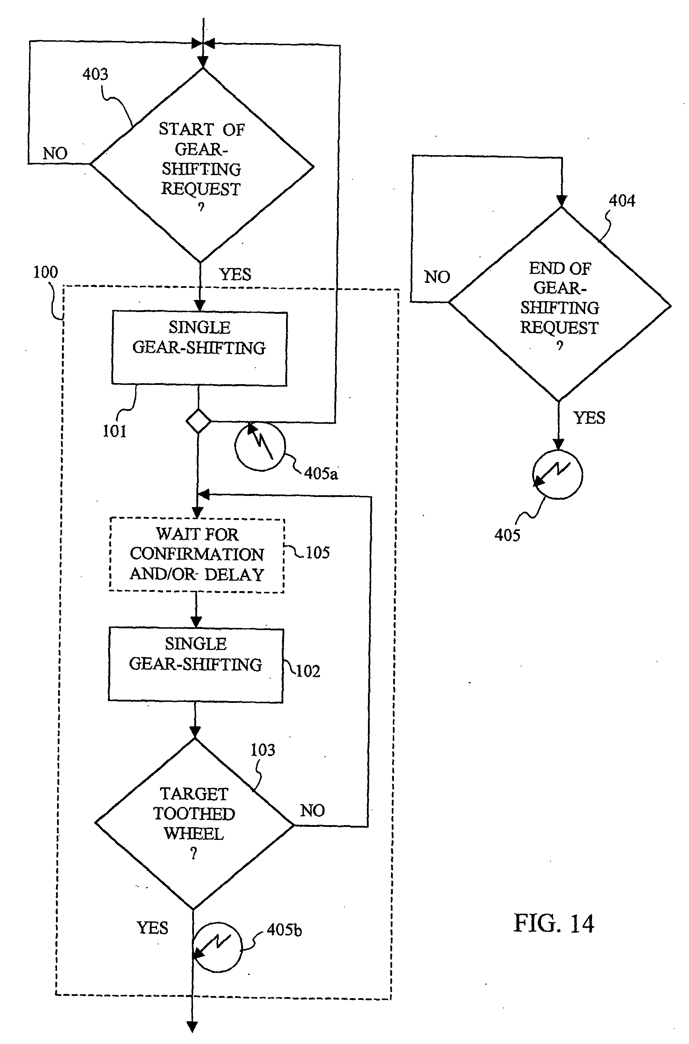

Another embodiment (figure 14) comprises the steps of waiting 403 for the receipt of a start of gear-shifting request, carrying out block 101 (cf. figure 6) of actuating a single gear-shifting to move the chain 13 to a toothed wheel immediately adjacent to the current toothed wheel and at the same time monitoring, in a parallel cycle represented by block 404, the receipt of an end of gear-shifting request. If the end of gear-shifting request is received - as represented by the generation of. the lightning symbol 405 - before starting the first execution of step 102 (cf. figure 6), corresponding to the first repetition of step b) in the aforementioned step c), going back to block 403 of waiting for a start of gear-shifting request, as represented by the lightning symbol 405a which forces the right-hand branch of the output from block 101, otherwise carrying out the aforementioned step c), i.e. the cycle represented by blocks 102, 103 and possibly 105, wherein the repetition of the aforementioned step b) takes place until receipt of an end of gear-shifting request as an indication of the condition that the immediately adjacent toothed wheel is the target toothed wheel. This is schematically indicated by the lightning symbol 405b which forces the "yes" output from block 103.

This embodiment is particularly advantageous since it allows the electronic control unit or the user, in automatic or semiautomatic operation and in manual operation respectively, to establish *a posteriori* when a satisfactory transmission ratio has been reached. In the case of manual operation, the start request and the end request can be respectively provided by the actuation and release of a button or lever (for example one of the levers 43-46), by the pressing of two different buttons, by a first actuation and a subsequent second actuation of a button or lever (for example one of the levers 43-46).

In the various embodiments outlined above, a gear-shifting request, either multiple or simple, can be suspended until a predetermined minimum time has passed from the actuation of the last previous gear-shifting, either multiple or simple, due to the technical reasons outlined above.

In other words, blocks 101 of figure 6, 400 of figure 12, 400 of figure 13 and 403 of figure 14 can be preceded by a block of waiting for a delay, not shown.

Both this wait for a delay and the wait for the delay during the actuation of the multiple gear-shifting (block 105) can in practice be embodied by a cycle in the software program according to the invention, or else through a timer.

The timer can, of course, be a count-down or a count-up timer and can be embodied by a memory variable managed by the clock signal of a microprocessor of the electronic control unit 40 or by a dedicated device.

Besides being able to have a preset value, the delay can be dynamically calculated, in other words it can be predetermined as a function of a predetermined desired displacement of the chain 13 on the intermediate toothed wheel.

The displacement can be evaluated based upon an angular position or angular speed sensor (not shown) of one or both gearshift groups 9, 10 with respect to an angular reference position. It should be noted that the angular speeds of the two gearshift groups are related to each other by the current transmission ratio, given by the ratio between the radii of the toothed wheels 11, 12 respectively engaged with the chain 13. Therefore, a single sensor in one of the two gearshift groups is sufficient. As a further alternative, an angular position or angular speed sensor coupled with one of the two wheels 4, 6 of the bicycle 1 can be used.

Preferably the sensor can be or comprise a sensor of crossing of a reference position by at least one chain engagement easing zone of the intermediate toothed wheel, for example as described in the cited American patent application published as US 2001/0048211 A1.

The predetermined displacement can be also evaluated based upon the speed of the chain or of the bicycle, detected by a suitable sensor.

Advantageously, the predetermined angular displacement is chosen as equal to the angular distance between chain engagement easing zones of the intermediate toothed wheel or to a whole multiple of such an angular distance.

In particular, if there are m easing zones equally distributed on the toothed wheel at an angular distance ALFA, the desired displacement shall preferably be chosen as equal to n x ALFA (with n integer greater than or equal to 1) and the delay can be calculated from the relationship D = R x n x ALFA / v or D = n x ALFA /w, where R is the radius of the intermediate toothed wheel, v and w are the speed of the chain, respectively linear and angular, at the intermediate toothed wheel.

The microprocessor(s) electronic control unit with 40 can, for example, be made in C-MOS technology, which has the advantages of having low energy consumption.

As an alternative to implementation through dedicated hardware, the functionalities of the electronic control unit 40 described above can be accomplished by a software program that can be loaded in a small computer.

## Claims

1. Method for electronically servo-assisting an electronically servo-assisted bicycle gearshift (8), comprising the step of
a) actuating a multiple gear-shifting to move a chain in a gear-shifting way with respect to a gearshift group having at least three toothed wheels, from a current toothed wheel to a target toothed wheel not immediately adjacent to the current toothed wheel
wherein step a) of actuating a multiple gear-shifting comprises the steps of:
b) actuating a single gear-shifting to move the chain to a toothed wheel immediately adjacent to the current toothed wheel in the gear-shifting direction,
c) repeating step b) until said immediately adjacent toothed wheel is the target toothed wheel.

2. Method according to claim 1, **characterized in that** said step c) comprises the step of:
d) waiting for a confirmation of the previous execution of step b).

3. Method according to claim 1 or 2, **characterized in that** said step c) comprises the step of:
e) waiting for a predetermined delay (D;RD,FD;UD,DD;RUD,RDD,FUD,FDD;RiD,FiD;RiUD,RiDD,FiUD, FiDD).

4. Method according to claim 3 when dependent upon claim 2, **characterized in that** said predetermined delay is within the range between 100 milliseconds and 350 milliseconds.

5. Method according to claim 3 or 4 when dependent upon claim 2, further comprising, if the confirmation signal is received before or after, respectively, a foreseen instant, the step of increasing or decreasing, respectively, the predetermined delay.

6. Method according to one of claims 3-5, **characterized in that** said predetermined delay (RD, FD) is independently provided or not, for each gearshift group.

7. Method according to one of claims 3-6, **characterized in that** said predetermined delay is independently provided or not, for each gear-shifting direction (UD,DD;RUD,RDD,FUD,FDD).

8. Method according to one of claims 3-7, **characterized in that** said predetermined delay is independently provided or not, for each immediately adjacent toothed wheel (RiD,FiD;RiUD,RiDD,FiUD,FiDD).

9. Method according to any one of claims 3-8, **characterized in that** it comprises the step of setting said delay through a user interface.

10. Method according to any one of claims 3-9, **characterized in that** it comprises the step of:
f) predetermining the predetermined delay as a function of a predetermined displacement of the chain on said immediately adjacent toothed wheel.

11. Method according to claim 10 **characterized in that** the predetermined displacement is evaluated based upon an angular position or angular speed sensor.

12. Method according to claim 11, **characterized in that** the angular position sensor comprises a sensor of the crossing of an angular reference position by at least one chain engagement easing zone of the immediately adjacent toothed wheel.

13. Method according to claim 10 **characterized in that** the predetermined displacement is evaluated based upon respectively the speed of the chain or of the bicycle.

14. Method according to one of claims 10 or 13, **characterized in that** the predetermined angular displacement is equal to the angular distance between chain engagement easing zones of the immediately adjacent toothed wheel or to a whole multiple thereof (n).

15. Method according to any one of the previous claims, further comprising the steps of:
g) waiting to receive a gear-shifting request,
h) establishing whether the gear-shifting request is a single gear-shifting request or a multiple gear-shifting request,
h1) if it is a single gear-shifting request, carrying out the step of actuating a single gear-shifting to move the chain from the starting toothed wheel to a target toothed wheel immediately adjacent to the starting toothed wheel in the gear-shifting direction,
h2) if it is a multiple gear-shifting request, carrying out the step a) of actuating a multiple gear-shifting.

16. Method according to claim 15, **characterized in that** step h) is carried out based upon the duration of a signal received by a user interface.

17. Method according to claim 15, **characterized in that** step h) is carried out based upon the number of consecutive signals received by a user interface.

18. Method according to claim 15, **characterized in that** step h) is carried out based upon a signal received by a user interface chosen among a plurality of signals.

19. Method according to any one of claims 1-14, comprising the sequential steps of:
i) waiting for a gear-shifting request,
j) establishing whether it is a single gear-shifting request or a multiple gear-shifting request signal, carried out at the same time as step b),
if it is a multiple gear-shifting request, carrying out said step c),
if it is a single gear-shifting request, going back to the execution of step i).

20. Method according to any one of claims 1-18, further comprising the step, carried out before step b), of:
k) waiting to receive a start of gear-shifting request and the step of:
b1) monitoring the receipt of an end of gear-shifting request,
if the end of gear-shifting request is received before starting the execution of step c), going back to the execution of step k),
otherwise carrying out said step c), repeating said step b) until receipt of the end of gear-shifting request as an indication of the condition that the immediately adjacent toothed wheel is the target toothed wheel.

21. Method according to one of claims 15-20, **characterized in that** said requests are received by a user interface.

22. Method according to any one of claims 15-21, **characterized by** the step of suspending the gear-shifting request until a predetermined minimum time from the actuation of the last previous gear-shifting has passed.

23. Program for electronically servo-assisting a bicycle gearshift (8), comprising program code means suitable to carry out the steps of the method of any of the previous claims when the program is carried out on a processor, embodied in at least one micro-controller.

24. Electronic circuit suitable to carry out the steps of the method of any one of claims 1 to 22.

25. Electronically servo-assisted bicycle gearshift (8), comprising:
- a chain (13) and toothed wheels (11, 12) system for the transmission of motion from the axle (B) of the pedal cranks (7) to a driving-wheel (4) of the bicycle (1), said motion transmission system comprising
-- at least one gearshift group (9, 10) having at least three toothed wheels (11, 12) coaxial along an axis (X) selected among the axle of the pedal cranks (B) and the axis (A) of the driving-wheel (4), said at least one gearshift group (9, 10) comprising guide means (14, 15) to move the chain (13) into engagement with a predetermined toothed wheel (11, 12) of the gearshift group (9, 10) and an actuator (16, 17) of the guide means (14, 15),
- an electronic control unit (40) suitable to drive the actuator (16, 17) of the at least one gearshift group (9, 10), comprising means for actuating the method according to any one of claims 1-22.

26. Bicycle gearshift according to claim 25, **characterized in that** said at least one gearshift group (9, 10) comprises a transducer (18, 19) of the position of the guide element (14, 15) with respect to the toothed wheels (11, 12) of the gearshift group (9, 10), suitable to provide said confirmation signal.

27. Bicycle gearshift according to one of claims 25-26, **characterized in that** the electronic control unit (40) comprises memory means (49, 50) suitable to store the or every predetermined delay.

28. Bicycle gearshift according to claim 27, **characterized in that** the memory means (49-50) are housed in a casing that can be removed from the bicycle (1), preferably in a removable display unit (60).

29. Bicycle gearshift according to one of claims 25-28, **characterized in that** it comprises interface means between a user and the electronic control unit (40), operating to send said gear-shifting request, start of gear-shifting request and/or end of gear-shifting request signals to the electronic control unit (40), and/or to set the value of the or each delay.

## Patentansprüche

1. Verfahren zur elektronischen Servo-Unterstützung einer Fahrrad-Gangschaltung (8) mit elektronischer Servo-Unterstützung, das die folgenden Schritte umfasst:
a) Auslösen eines Mehrfach-Gangschaltvorgangs, um eine Kette auf einem Gangschaltweg in Bezug auf eine Gangschaltungsgruppe mit wenigstens drei Zahnrädern von einem aktuellen Zahnrad zu einem Ziel-Zahnrad zu bewegen, das nicht unmittelbar an das aktuelle Zahnrad angrenzt,
wobei Schritt a) des Auslösens eines Mehrfach-Gangschaltvorgangs die folgenden Schritte umfasst:
b) Auslösen eines Einfach-Gangschaltvorgangs, um die Kette auf ein Zahnrad zu bewegen, das in der Gangschaltrichtung unmittelbar an das aktuelle Zahnrad angrenzt,
c) Wiederholen von Schritt b), bis das unmittelbar angrenzende Zahnrad das Ziel-Zahnrad ist.

2. Verfahren nach Anspruch 1, **dadurch gekennzeichnet, dass** der Schritt c) den folgenden Schritt umfasst:
d) Warten auf eine Bestätigung der vorangehenden Ausführung von Schritt b).

3. Verfahren nach Anspruch 1 oder 2, **dadurch gekennzeichnet, dass** der Schritt c) den folgenden Schritt umfasst:
e) Abwarten einer vorgegebenen Verzögerung (D; RD, FD; UD, DD; RUD, RDD, FUD, FDD; RiD, FiD; RiUD, RiDD, FiUD, FiDD).

4. Verfahren nach Anspruch 3, wenn abhängig von Anspruch 2, **dadurch gekennzeichnet, dass** die vorgegebene Verzögerung im Bereich zwischen 100 Millisekunden und 350 Millisekunden liegt.

5. Verfahren nach Anspruch 3 oder 4, wenn abhängig von Anspruch 2, das des Weiteren, wenn das Bestätigungssignal vor bzw. nach einem vorgesehenen Zeitpunkt empfangen wird, den Schritt des Verlängerns bzw. Verkürzens der vorgegebenen Verzögerung umfasst.

6. Verfahren nach einem der Ansprüche 3-5, **dadurch gekennzeichnet, dass** die vorgegebene Verzögerung (RD, FD) unabhängig für jede Gangschaltungsgruppe vorhanden ist oder nicht.

7. , Verfahren nach einem der Ansprüche 3-6, **dadurch gekennzeichnet, dass** die vorgegebene Verzögerung unabhängig für jede Gangschaltrichtung (DU, DD; RUD, RDD, FUD, FDD) vorhanden ist oder nicht.

8. Verfahren nach einem der Ansprüche 3-7, **dadurch gekennzeichnet, dass** die vorgegebene Verzögerung unabhängig für jedes unmittelbar angrenzende Zahnrad (RiD, FiD; RiUD, RiDD, FiUD, FiDD) vorhanden ist oder nicht.

9. Verfahren nach einem der Ansprüche 3-8, **dadurch gekennzeichnet, dass** es den Schritt des Einstellens der Verzögerung über eine Benutzerschnittstelle umfasst.

10. Verfahren nach einem der Ansprüche 3-8, **dadurch gekennzeichnet, dass** es den folgenden Schritt umfasst:
f) Vorgeben der vorgegebenen Verzögerung als eine Funktion einer vorgegebenen Verschiebung der Kette auf das unmittelbar angrenzende Zahnrad.

11. Verfahren nach Anspruch 10, **dadurch gekennzeichnet, dass** die vorgegebene Verzögerung auf Basis eines Winkelpositions- oder Winkelgeschwindigkeitssensors bewertet wird.

12. Verfahren nach Anspruch 11, **dadurch gekennzelchnet, dass** der Winkelpositionssensor einen Sensor für das Schneiden einer Winkelbezugsposition durch wenigstens eine Ketteneingriffs-Lösezone des unmittelbar angrenzenden Zahnrades umfasst.

13. Verfahren nach Anspruch 10, **dadurch gekennzeichnet, dass** die vorgegebene Verschiebung auf Basis der Geschwindigkeit der Kette bzw. des Fahrrades bewertet wird.

14. Verfahren nach einem der Ansprüche 10 oder 13, **dadurch gekennzeichnet, dass** die vorgegebene Winkelverschiebung dem Winkelabstand zwischen Ketteneingriffs-Lösezonen des unmittelbar angrenzenden Zahnrades oder einem ganzen Vielfachen desselben (n) entspricht.

15. Verfahren nach einem der vorangehenden Ansprüche, das des Weiteren die folgenden Schritte umfasst:
g) Warten auf den Empfang einer Gangschalt-Anforderung,
h) Feststellen, ob die Gangschalt-Anforderung eine Anforderung für einen Einfach-Gangschaltvorgang oder eine Anforderung für einen Mehrfach-Gangschaltvorgang ist,
h1) wenn sie eine Anforderung für einen Einfach-Gangschaltvorgang ist, Ausführen des Schrittes des Auslösens eines Einfach-Gangschaltvorgangs, um die Kette von dem Ausgangs-Zahnrad zu einem Ziel-Zahnrad zu bewegen, das in der Gangschaltrichtung unmittelbar an das Ausgangs-Zahnrad angrenzt,
h2) wenn sie eine Anforderung für einen Mehrfach-Gangschaltvorgang ist, Ausführen des Schrittes a) des Auslösens eines Mehrfach-Gangschaltvorgangs.

16. Verfahren nach Anspruch 15, **dadurch gekennzeichnet, dass** Schritt h) auf Basis der Dauer eines Signals ausgeführt wird, das von einer Benutzerschnittstelle empfangen wird.

17. Verfahren nach Anspruch 15, **dadurch gekennzeichnet, dass** Schritt h) auf Basis der Anzahl aufeinanderfolgender Signale ausgeführt wird, die von einer Benutzerschnittstelle empfangen werden.

18. Verfahren nach Anspruch 15, **dadurch gekennzeichnet, dass** Schritt h) auf Basis eines durch eine Benutzerschnittstelle empfangenen Signals ausgeführt wird, das aus einer Vielzahl von Signalen ausgewählt wird.

19. Verfahren nach einem der Ansprüche 1-14, das die folgenden aufeinanderfolgenden Schritte umfasst:
i) Warten auf eine Gangschalt-Anforderung,
j) Feststellen, ob sie ein Anforderungssignal für einen Einfach-Gangschaltvorgang oder ein Anforderungssignal für einen Mehrfach-Gangschaltvorgang ist, wobei dies zur gleichen Zeit ausgeführt wird wie Schritt b),
wenn sie eine Anforderung für einen Mehrfach-Gangschaltvorgang ist, Ausführen des Schrittes c),
wenn sie eine Anforderung für einen Einfach-Gangschaltvorgang ist, Zurückkehren zur Ausführung von Schritt i).

20. Verfahren nach einem der Ansprüche 1-18, das des Weiteren den vor Schritt b) ausgeführten folgenden Schritt umfasst:
k) Warten auf den Empfang eines Anfangs einer Gangschalt-Anforderung, und den folgenden Schritt:
b1) Überwachen des Empfangs eines Endes der Gangschalt-Anforderung,
wenn das Ende der Gangschalt-Anforderung empfangen wird, bevor die Ausführung von Schritt c) begonnen wird, Zurückkehren zu der Ausführung von Schritt k),
ansonsten Ausführen des Schrittes c), Wiederholen des Schrittes b), bis zum Empfang des Endes der Gangschalt-Anforderung als eine Anzeige des Zustandes, das das unmittelbar angrenzende Zahnrad das Ziel-Zahnrad ist.

21. Verfahren nach einem der Ansprüche 15-20, **dadurch gekennzeichnet, dass** die Anforderungen durch eine Benutzerschnittstelle empfangen werden.

22. Verfahren nach einem der Ansprüche 15-21, **gekennzeichnet durch** den Schritt des Zurückhaltens der Gangschalt-Aufforderung, bis eine vorgegebene minimale Zeit von der Auslösung des letzten vorangehenden Gangschaltvörgangs vergangen ist.

23. Programm zur elektronischen Servo-Unterstützung einer Fahrrad-Gangschaltung (8), das Programmcodemittel umfasst, die geeignet sind, um die Schritte des Verfahrens nach einem der vorangehenden Ansprüche auszuführen, wenn das Programm auf einem Prozessor ausgeführt wird, der als wenigstens ein Micro-controller ausgeführt ist.

24. Elektronische Schaltung, die geeignet ist, um die Schritte des Verfahrens nach einem der Ansprüche 1-22 auszuführen.

25. Fahrrad-Gangschaltung mit elektronischer Servo-Unterstützung (8), die umfasst:
ein System aus Kette (13) und Zahnrädern (11, 12) zur Übertragung von Bewegung von der Achse (B) der Pedalkurbeln (7) auf ein Antriebsrad (4) des Fahrrads (1), wobei das Bewegungsübertragungssystem umfasst:
wenigstens eine Gangschaltungsgruppe (9, 10), die wenigstens drei Zahnräder (11, 12) koaxial entlang einer Achse (X) aufweist, die aus der Achse der Pedalkurbeln (B) und der Achse (A) des Antriebsrades (4) ausgewählt wird, wobei die wenigstens eine Gangschaltungsgruppe (9, 10) Führungseinrichtungen (14, 15), die die Kette (13) in Eingriff mit einem vorgegebenen Zahnrad (11, 12) der Gangschattungsgruppe (9, 10) bewegen, und ein Betätigungselement (16, 17) der Führungseinrichtungen (14, 15) umfasst,
eine elektronische Steuerschaltung (40), die geeignet ist, um das Betätigungselement (16, 17) der wenigstens einen Gangschaltungsgruppe (9, 10) anzutreiben und die eine Einrichtung zum Auslösen des Verfahrens nach einem der Ansprüche 1-22 umfasst.

26. Fahrrad-Gangschaltung nach Anspruch 25, **dadurch gekennzeichnet, dass** die wenigstens eine Gangschaltungsgruppe (9, 10) einen Wandler (18, 19) der Position des Führungselementes (14, 15) in Bezug auf die Zahnräder (11, 12) in der Gangschaltungsgruppe (9, 10) umfasst, der geeignet ist, um das Bestätigungssignal zu erzeugen.

27. Fahrrad-Gangschaltung nach einem der Ansprüche 25-26, **dadurch gekennzeichnet, dass** die elektronische Steuereinheit (40) eine Speichereinrichtung (49, 50) umfasst, die geeignet ist, um die oder jede vorgegebene Verzögerung zu speichern.

28. Fahrrad-Gangschaltung nach Anspruch 27, **dadurch gekennzeichnet, dass** die Speichereinrichtung (49-50) in einem Gehäuse aufgenommen ist, das von dem Fahrrad (1) entfernt werden kann, vorzugsweise in einer entfernbaren Anzeigeeinheit (60).

29. Fahrrad-Gangschaltung nach einem der Ansprüche 25-28, **dadurch gekennzeichnet, dass** sie eine Schnittstelleneinrichtung zwischen einem Benutzer und der elektronischen Steuereinheit (40) umfasst, die so arbeitet, **dass** sie die Signale für Gangschalt-Anforderung, Gangschalt-Anforderungsanfang und/oder Gangschalt-Anforderungsende zu der elektronischen Steuereinheit (40) sendet und/oder den Wert der oder jeder Verzögerung festlegt.

## Revendications

1. Procédé pour l'asservissement électronique d'un dérailleur de bicyclette (8) électroniquement asservi, comprenant l'étape :
a) d'actionnement d'un dérailleur multiple pour déplacer une chaîne de manière à changer de vitesse par rapport à un groupe de dérailleurs comportant au moins trois roues dentées, entre une roue dentée en cours d'utilisation et une roue dentée visée qui n'est pas immédiatement adjacente à la roue dentée en cours d'utilisation,
dans lequel l'étape a) d'actionnement d'un dérailleur multiple comprend les étapes de :
b) actionnement d'un dérailleur simple pour déplacer la chaîne vers une roue dentée immédiatement adjacente à la roue dentée en cours d'utilisation dans le sens de changement de vitesse,
c) répétition de l'étape b) jusqu'à ce que ladite roue dentée immédiatement adjacente soit la roue dentée visée.

2. Procédé selon la revendication 1, **caractérisé en ce que** ladite étape c) comprend l'étape de :
d) attente d'une confirmation de l'exécution précédente de l'étape b).

3. Procédé selon la revendication 1 ou 2, **caractérisé en ce que** ladite étape c) comprend l'étape de :
d) attente pendant un temps d'attente prédéterminé (D ; RD, FD ; UD, DD ; RUD, RDD, FUD, FDD ; RiD, FiD ; RiUD, RiDD, FiUD, FiDD).

4. Procédé selon la revendication 3 lorsqu'elle est dépendante de la revendication 2, **caractérisé en ce que** ledit temps d'attente prédéterminé se trouve dans la plage comprise entre 100 millisecondes et 350 millisecondes.

5. Procédé selon la revendication 3 ou 4 lorsqu'elle est dépendante de la revendication 2, comprenant également, si le signal de confirmation est reçu respectivement avant ou après un instant prévu, l'étape d'augmentation ou de diminution, respectivement, du temps d'attente prédéterminé.

6. Procédé selon l'une quelconque des revendications 3 à 5, **caractérisé en ce que** ledit temps d'attente prédéterminé (RD, FD) est fourni ou non indépendamment, pour chaque groupe de dérailleurs.

7. Procédé selon l'une quelconque des revendications 3 à 6, **caractérisé en ce que** ledit temps d'attente prédéterminé est fourni ou non indépendamment, pour chaque sens de changement de vitesse (UD, DD ; RUD, RDD, FUD, FDD).

8. Procédé selon l'une quelconque des revendications 3 à 7, **caractérisé en ce que** ledit temps d'attente prédéterminé est fourni ou non indépendamment, pour chaque roue dentée immédiatement adjacente (RiD, FiD ; RiUD, RiDD, FiUD, FiDD).

9. Procédé selon l'une quelconque des revendications 3 à 8, **caractérisé en ce qu'**il comprend l'étape de réglage dudit temps d'attente à l'aide d'une interface utilisateur.

10. Procédé selon l'une quelconque des revendications 3 à 9, **caractérisé en ce qu'**il comprend l'étape de :
f) prédétermination du temps d'attente prédéterminé en fonction d'un déplacement prédéterminé de la chaîne sur ladite roue dentée immédiatement adjacente.

11. Procédé selon la revendication 10, **caractérisé en ce que** le déplacement prédéterminé est évalué sur la base d'une position angulaire ou d'un détecteur de vitesse angulaire.

12. Procédé selon la revendication 11, **caractérisé en ce que** le détecteur de vitesse angulaire comprend un détecteur du croisement d'une position de référence angulaire par au moins une zone de désengagement de chaîne de la roue dentée immédiatement adjacente.

13. Procédé selon la revendication 10, **caractérisé en ce que** le déplacement prédéterminé est évalué sur la base, respectivement, de la vitesse de la chaîne ou de la bicyclette.

14. Procédé selon l'une quelconque des revendications 10 ou 13, **caractérisé en ce que** le déplacement angulaire prédéterminé est égal à la distance angulaire entre les zones de désengagement de chaîne de la roue dentée immédiatement adjacente ou à un multiple entier de celle-ci (n).

15. Procédé selon l'une quelconque des revendications précédentes, comprenant, en outre, les étapes consistant à :
g) attendre la réception d'une demande de changement de vitesse,
h) déterminer si la demande de changement de vitesse est une demande de changement de vitesse simple ou une demande de changement de vitesse multiple,
h1) si c'est une demande de changement de vitesse simple, exécuter l'étape d'actionnement d'un dérailleur simple pour déplacer la chaîne entre la roue dentée de démarrage et une roue dentée visée immédiatement adjacente à la roue dentée de démarrage dans le sens de changement de vitesse,
h2) si c'est une demande de changement de vitesse multiple, exécuter l'étape a) d'actionnement d'un dérailleur multiple.

16. Procédé selon la revendication 15, **caractérisé en ce que** l'étape h) est exécutée sur la base de la durée d'un signal reçu par une interface utilisateur.

17. Procédé selon la revendication 15, **caractérisé en ce que** l'étape h) est exécutée sur la base du nombre de signaux consécutifs reçus par une interface utilisateur.

18. Procédé selon la revendication 15, **caractérisé en ce que** l'étape h) est exécutée sur la base d'un signal reçu par une interface utilisateur choisi parmi une pluralité de signaux.

19. Procédé selon l'une quelconque des revendications 1 à 14, comprenant les étapes séquentielles consistant à :
i) attendre une demande de changement de vitesse,
j) déterminer si c'est un signal de demande de changement de vitesse simple ou un signal de demande de changement de vitesse multiple, exécuté en même temps que l'étape b),
si c'est une demande de changement de vitesse multiple, exécuter ladite étape c),
si c'est une demande de changement de vitesse simple, revenir à l'exécution de l'étape i).

20. Procédé selon l'une quelconque des revendications 1 à 18, comprenant, en outre, l'étape exécutée avant l'étape b) consistant à :
k) attendre de recevoir un début de demande de changement de vitesse, et l'étape consistant à :
b1) surveiller la réception d'une fin de demande de changement de vitesse,
si la fin de demande de changement de vitesse est reçue avant le démarrage de l'exécution de l'étape c), revenir à l'exécution de l'étape k),
sinon, exécuter ladite étape c), répéter ladite étape b) jusqu'à la réception de la fin de demande de changement de vitesse, comme une indication sur la condition selon laquelle la roue dentée immédiatement adjacente est la roue dentée visée.

21. Procédé selon l'une quelconque des revendications 15 à 20, **caractérisé en ce que** lesdites demandes sont reçues par une interface utilisateur.

22. Procédé selon l'une quelconque des revendications 15 à 21, **caractérisé par** l'étape de suspension de la demande de changement de vitesse jusqu'à ce qu'une durée minimale prédéterminée se soit écoulée depuis l'actionnement du dernier changement de vitesse précédent.

23. Programme pour l'asservissement électronique d'un dérailleur de bicyclette (8), comprenant des moyens de code programme appropriés pour exécuter les étapes du procédé selon l'une quelconque des revendications précédentes lorsque le programme est exécuté dans un processeur, mis en oeuvre dans au moins un microcontrôleur.

24. Circuit électronique approprié pour exécuter les étapes du procédé selon l'une quelconque des revendications 1 à 22.

25. Dérailleur de bicyclette (8) électroniquement asservi, comprenant :
- un système de chaîne (13) et de roues dentées (11, 12) pour la transmission du mouvement entre le moyeu (B) des manivelles du pédalier (7) et une roue motrice (4) de la bicyclette (1), ledit système de transmission du mouvement comprenant :
- au moins un groupe de dérailleurs (9, 10) comportant au moins trois roues dentées (11, 12) coaxiales le long d'un axe (X) sélectionné entre le moyeu des manivelles du pédalier (B) et l'axe (A) de la roue motrice (4), ledit au moins un groupe de dérailleurs (9, 10) comprenant des moyens de guidage (14, 15) pour déplacer la chaîne (13) pour qu'elle s'engrène avec une roue dentée prédéterminée (11, 12) du groupe de dérailleurs (9, 10) et un actionneur (16, 17) des moyens de guidage (14, 15),
- une unité de commande électronique (40) appropriée pour commander l'actionneur (16, 17) du au moins un groupe de dérailleurs (9, 10), comprenant des moyens pour réaliser le procédé selon l'une quelconque des revendications 1 à 22.

26. Dérailleur de bicyclette selon la revendication 25, **caractérisé en ce que** ledit au moins un groupe de dérailleurs (9, 10) comprend un capteur (18, 19) de position de l'élément de guidage (14, 15) par rapport aux roues dentées (11, 12) du groupe de dérailleurs (9, 10), approprié pour fournir ledit signal de confirmation.

27. Dérailleur de bicyclette selon l'une quelconque des revendications 25 à 26, **caractérisé en ce que** l'unité de commande électronique (40) comprend des moyens de mémorisation (49, 50) appropriés pour mémoriser le ou chaque temps d'attente prédéterminé.

28. Dérailleur de bicyclette selon la revendication 27, **caractérisé en ce que** les moyens de mémorisation (49, 50) sont logés dans un boîtier qui peut être enlevé de la bicyclette (1), de préférence dans une unité d'affichage amovible (60).

29. Dérailleur de bicyclette selon l'une quelconque des revendications 25 à 28, **caractérisé en ce qu'**il comprend des moyens d'interface entre un utilisateur et l'unité de commande électronique (40), fonctionnant pour envoyer lesdits signaux de demande de changement de vitesse, de départ de demande de changement de vitesse et/ou de fin de demande de changement de vitesse à l'unité de commande électronique (40), et/ou pour régler la valeur du ou de chaque temps d'attente prédéterminé.
